# FASCICULE DE BREVET EUROPEEN

(11) **EP 0 372 446 B1**
(45) Date de publication et mention de la délivrance du brevet: **03.11.1993**
(21) Numéro de dépôt: 89122311.7
(22) Date de dépôt: 04.12.1989
(51) Int. Cl.: H04Q 11/04, H04M 3/12

(54) **Dispositif de raccordement des lignes optiques à un central de télécommunication à large bande**
Vorrichtung zum Anschliessen von optischen Leitungen an einer Breibrandfernmeldeanlage
Device for connecting optical lines with a broadband telecommunication exchange

(30) Priorité: 06.12.1988 FR 8815968
(43) Date de publication de la demande: 13.06.1990
(73) Titulaire: ALCATEL CIT, 75008 Paris (FR)
(72) Inventeur: Leroy, Guy, F-22300 Lannion (FR)
(74) Mandataire: Weinmiller, Jürgen

(56) Documents cités:
- EP-A- 0 062 294
- JRT - JAPAN TELECOMMUNICATIONS REVIEW, vol. 29, no. 2, avril 1987, pages 23-29, Tokyo, JP; M. HIRATA: "High reliability subscriber loops with free access point concept"

## Description

L'invention concerne un dispositif de raccordement au central des lignes optiques de distribution et des lignes optiques de transport raccordant respectivement les abonnés aux centres de commutation et entre eux les centres de commutation d'un Réseau de Télécommunications multiservices à large bande tels les Réseaux BISDN ou les Réseaux de Télédistribution commutés, permettant d'effectuer automatiquement le test des lignes et le remplacement des joncteurs en panne par des joncteurs de secours.

Une ligne optique, de distribution ou de transport, sur laquelle sont transmis les signaux relatifs aux deux sens d'une communication par le moyen de deux longueurs d'onde optique, est constituée :
- soit de deux fibres optiques, acheminant chacune les signaux d'un des sens de la communication, chacune raccordant directement le circuit d'émission d'une extrémité de la ligne, lequel comprend un composant optoélectronique tel un laser, au circuit réception de l'autre extrémité de la ligne, lequel comprend un composant optoélectronique tel une diode PIN, les dits circuits d'émission et réception situés à une même extrémité de la ligne constituant l'interface optoélectronique,
   . soit du joncteur de ligne, dans le central,
   . soit de l'équipement terminal chez l'abonné,
   . soit d'un joncteur de circuit d'un central distant,
- soit d'une fibre optique unique acheminant les signaux des deux sens de la communication, raccordée en chacune de ses extrémités à un moyen de duplexage optique dont les autres sorties sont raccordées l'une au circuit d'émission, l'autre au circuit de réception d'un joncteur dans le central ou d'un équipement terminal chez l'abonné ou d'un joncteur de circuit.

L'ensemble constitué par la ligne et les circuits d'interface raccordés à ses extrémités est une liaison.

Toute défaillance d'un des éléments de la liaison, entraîne son indisponibilité et donc une interruption de service dont la durée dépend du temps de détection du défaut et du temps de réparation.

Les Réseaux multiservices à large bande, comme tout Réseau de télécommunications, mettent en oeuvre un très grand nombre de liaisons, telles que celle décrite ci-dessus. Et bien que les taux de défaillance unitaire des liaisons soient faibles, leur grand nombre entraîne naturellement un nombre de pannes relativement élevé qu'il faut d'une part détecter et analyser, et auxquelles il est d'autre part nécessaire de remédier pour assurer une bonne qualité de service.

L'ensemble des dispositions permettant de détecter les pannes des liaisons et de remédier aux défaillances en minimisant les interventions immédiates de maintenance constituent la sécurisation des liaisons.

La sécurisation des lignes téléphoniques d'abonnés constituées d'une paire de fils de cuivre raccordée à un joncteur est un problème connu : de nombreux dispositifs mettant en oeuvre des relais électromécaniques insérés sur les lignes, effectuant sous le contrôle de circuits de commande le renvoi des lignes et joncteurs vers des dispositifs de test et le raccordement des lignes à des joncteurs de secours ont été décrits.
- Dans le brevet français FR-A-2.503500, Dispositif de secours de terminal d'abonné, le dispositif décrit met en oeuvre au central au moins un terminal de secours ou une unité comprenant plusieurs terminaux de secours, connectés à la ligne ou aux lignes de renvoi aux essais des lignes d'abonnés par l'intermédiaire d'un circuit d'isolement, et pouvant remplacer l'un quelconque des terminaux correspondant aux lignes reliées à la ligne ou aux lignes de renvoi aux essais par le basculement du relais de renvoi aux essais de l'un quelconque des terminaux en panne, ou le basculement des relais de renvoi aux essais des terminaux de l'unité comprenant un terminal en panne.
- Dans le brevet français FR-A-2.555388, Dispositif de secours d'un terminal d'abonné dans un concentrateur numérique, le dispositif décrit met en oeuvre, dans le concentrateur, outre un bus d'essai de ligne et un bus d'essai de terminaux connectables chacun à une multiplicité de lignes de renvoi en essais desservant chacune un groupe de ligne d'abonnés, un bus de secours connectable aux lignes de renvoi en essais des lignes d'abonnés et permettant de raccorder une quelconque des lignes d'abonnés d'un groupe de lignes dont le terminal est en panne à un terminal quelconque d'un groupe de terminaux desservant un autre groupe de lignes, terminal non raccordé à une ligne d'abonné et faisant office de terminal de secours.
- Dans ces brevets les dits dispositifs de secours comprennent par ailleurs des moyens de commande des moyens de raccordement des dispositifs d'essai et de secours.

Les organisations et moyens décrits sont évidemment spécifiques aux techniques des lignes de cuivre et ne peuvent être reconduits ou simplement extrapolés dans le cas des lignes optiques, lesquelles connaissent des contraintes particulières, notamment en matière de raccordement et d'insertion de dispositifs, contraintes qui n'existent pas dans le cas des lignes de cuivre.

Il faut remarquer par ailleurs que les dispositifs décrits ci-dessus, économiquement optimisés pour un service téléphonique caractérisé par une durée relativement courte des communications et l'existence de longues périodes de faible trafic, présentent une particularité organique qui, dans le cas d'un système multiservices dans lequel les lignes connaissent un fort taux d'activité et les communications relatives à certains services ont des durées importantes, constitue un inconvénient majeur, particularité qui est l'impossibilité de procéder à des essais dans un groupe de lignes ou unité terminale de lignes ayant une ligne raccordée à un joncteur de secours sans déconnecter celle-ci du moyen de secours, c'est-à-dire sans interrompre le service à ladite ligne, du fait que les raccordements aux moyens d'essais et raccordement aux moyens de secours utilisent des éléments communs.

On connait par ailleurs des dispositifs de sécurisation de liaisons optiques, notamment pour la transmission à longue distance, qui consistent en une multiplication des composants optoélectroniques d'interface associés à chaque ligne, les dits composants étant raccordés aux lignes par des moyens de commutation à déplacement mécanique.

En particulier, la demanderesse a décrit dans le brevet FR-A-2.528586 "Dispositifs de commutation optique" un dispositif permettant la mise en service d'une diode laser parmi quatre à l'extrémité d'une fibre optique, comportant un premier étage de commutation formé de deux commutateurs inverseurs optiques et un étage de couplage formé d'un coupleur passif en Y, et dans la demande FR-A-2.602061, "Commutateur mécanique pour fibre optique", un commutateur qui pourrait être utilisé dans l'étage de commutation du brevet précédent.

De tels dispositifs ne peuvent être utilisés pour la sécurisation d'un grand nombre de liaisons pour des raisons économiques et techniques : encombrement, protection limitée aux seules défaillances des composants d'interface optoélectroniques impliquant la mise en oeuvre d'autres dispositions pour pallier aux défaillances des circuits électroniques de la liaison.

Le but de l'invention est de réaliser un dispositif de raccordement de lignes optiques à un central,
- qui permette
   . le test, par des moyens automatiques, des lignes et des joncteurs et notamment des moyens optiques et optoélectroniques inclus dans les lignes et joncteurs,
   . le test des lignes raccordées à des joncteurs de secours, le test des joncteurs de secours raccordés ou non à des lignes, sans interruption du service sur les autres lignes,
   . le raccordement aux joncteurs de secours des seules lignes constatées en panne,
   . l'autotest des dispositifs de test,
- qui ne dégrade pas le budget de transmission des liaisons optiques quel qu'en soit l'état de configuration : nominale, en test, ou raccordées à des joncteurs de secours, et de ce fait permette la mise en oeuvre de joncteurs de secours identiques aux joncteurs normalement associés aux lignes et la mise en oeuvre de circuits de test ayant des éléments optoélectroniques identiques à ceux mis en oeuvre dans les joncteurs,
- dont l'encombrement et la modularité soient tels que le dispositif puisse être utilisé dans des centraux de tailles diverses et évolutives dans le temps,
- dont le coût soit optimisé.

L'invention a pour objet un dispositif de raccordement au central des lignes optiques raccordant des abonnés et des centres de commutation au central, dans un réseau de télécommunications multiservices à large bande, tels les réseaux BISDN et les réseaux de télédistribution commutés, chaque ligne optique reliée à un abonné étant raccordée d'une part à un circuit d'émission et à un circuit de réception d'un terminal d'abonné chez l'abonné, et d'autre part à un circuit d'émission et un circuit de réception d'un joncteur du central, chaque ligne optique reliée à un centre de commutation étant raccordée d'une part à un circuit d'émission et à un circuit de réception d'un joncteur de circuit dudit centre et d'autre part à un circuit d'émission et à un circuit de réception d'un joncteur du central, ledit central comportant également des joncteurs de secours, caractérisé par le fait que les lignes optiques sont reliées aux joncteurs du central et à des joncteurs de secours par au moins un ensemble de raccordement comportant au moins un module de raccordement ayant une capacité de raccordement de N lignes optiques, qu'un module de raccordement comporte un premier, un deuxième et un troisième ensembles de commutateurs optiques, et que dans un module de raccordement le premier ensemble de commutateurs optiques est raccordé aux lignes optiques, le deuxième ensemble de commutateurs optiques est raccordé d'une part au premier ensemble de commutateurs optiques et d'autre part aux joncteurs et aux joncteurs de secours associés aux N lignes optiques et le troisième ensemble de commutateurs optiques est raccordé d'une part au premier ensemble de commutateurs optiques et d'autre part à au moins un circuit de test par une fibre optique de test de ligne, et par une fibre optique de test de joncteur.

Suivant une autre caractéristique de l'invention, les lignes optiques sont reliées aux joncteurs du central et aux joncteurs de secours par un seul ensemble de raccordement acheminant les signaux optiques des deux sens d'une communication, chaque ligne optique est constituée par une seule fibre optique acheminant les signaux optiques des deux sens d'une communication, chaque joncteur et chaque joncteur de secours est relié au deuxième ensemble de commutateurs optiques par un duplexeur et une seule fibre optique, et l'ensemble de raccordement est relié par la fibre optique de test de ligne et un duplexeur à un circuit de test d'émission et à un circuit de test de réception et par la fibre optique de test de joncteur et un autre duplexeur audit circuit de test d'émission et audit circuit de test de réception.

Suivant une autre caractéristique de l'invention, un dispositif de raccordement comporte un premier et un deuxième ensembles de raccordement affectés chacun à un sens de communication, chaque circuit d'émission des joncteurs et des joncteurs de secours est relié par une fibre émission au premier ensemble de raccordement, chaque circuit de réception des joncteurs et des joncteurs de secours est relié par une fibre réception au deuxième ensemble de raccordement, chaque ligne optique est constituée par une seule fibre optique reliée aux deux ensembles de raccordement par un duplexeur, chaque ensemble de raccordement est relié par une fibre optique audit duplexeur, et le premier ensemble de raccordement est relié à un circuit de test d'émission, le deuxième ensemble de raccordement étant relié à un circuit de test de réception.

Suivant une autre caractéristique de l'invention, un dispositif de raccordement comporte un premier et un deuxième ensembles de raccordement affectés chacun à un sens de communication, chaque circuit d'émission des joncteurs et des joncteurs de secours est relié par une fibre optique émission au premier ensemble de raccordement, chaque circuit de réception des joncteurs et des joncteurs de secours est relié par une fibre optique réception au deuxième ensemble de raccordement, les lignes optiques sont constituées chacune par une première et une deuxième fibres optiques, chaque circuit de réception des terminaux d'abonnés et des joncteurs de circuit est relié par la première fibre optique d'une ligne optique au premier ensemble de raccordement, chaque circuit d'émission des terminaux d'abonnés et des joncteurs de circuit est relié par la deuxième fibre optique d'une ligne optique au deuxième ensemble de raccordement, et le premier ensemble de raccordement est relié à un circuit de test d'émission le deuxième ensemble de raccordement étant relié à un circuit de test de réception.

Suivant une autre caractéristique de l'invention, un ensemble de raccordement comporte plusieurs modules de raccordement et un quatrième ensemble de commutateurs optiques, le troisième ensemble de commutateurs optiques de chacun des modules de raccordement est relié aux quatrième ensemble de commutateurs optiques, et ledit quatrième ensemble de commutateurs optiques est relié à au moins un circuit de test par ladite fibre optique de test de ligne et par ladite fibre optique de test de joncteur.

Suivant une autre caractéristique de l'invention, chaque ensemble de commutateurs optiques est constitué par des commutateurs optiques ayant chacun deux groupes d'accès, le premier groupe d'accès comportant P paires d'accès formées d'un premier et d'un second accès normalement raccordés l'un à l'autre par des moyens internes du commutateur optique, le deuxième groupe d'accès comportant un premier et un deuxième accès respectivement raccordés aux premier et second accès de n'importe laquelle des P paires d'accès du premier groupe par des moyens interne du commutateur optique après rupture du raccordement interne des accès de la paire.

Suivant une autre caractéristique de l'invention, le deuxième ensemble de commutateurs optiques est constitué par des commutateurs optiques ayant chacun deux groupes de P accès tels que les accès de même rang de chacun des deux groupes sont associés et raccordés l'un à l'autre par des moyens internes des commutateurs optiques et au moins une liaison interne par laquelle l'un quelconque des accès du premier groupe peut être raccordé à l'un quelconque des accès du deuxième groupe après rupture des raccordements internes respectifs de chacun des dits quelconques accès avec l'accès associé.

Suivant une autre caractéristique de l'invention, un commutateur optique des premier et deuxième ensembles de commutateurs optiques qui sont interconnectés entre eux, sont associés pour former une matrice optique.

Suivant une autre caractéristique de l'invention, les commutateurs optiques des ensembles de raccordement sont raccordés par des lignes de commande à un circuit de commande lui même raccordé à des moyens de commande du central.

L'invention va être précisée par la description qui va suivre d'un mode préféré de réalisation de l'invention, donné à titre d'exemple non limitatif, en référence au dessin annexé dans lequel :
- la figure 1A représente le schéma général d'un dispositif de raccordement au central de lignes optiques de distribution et de transport selon l'invention, dans le cas où les lignes optiques sont chacune constituées de deux fibres optiques,
- la figure 1B représente le schéma général d'un dispositif de raccordement au central de lignes optiques de distibution et de transport selon l'invention, dans le cas où les lignes optiques sont chacune constituées d'une seule fibre optique,
- les figures 2A et 2B représentent respectivement les schémas de principe et de réalisation d'un commutateur optique tel que ceux mis en oeuvre dans le dispositif,
- la figure 3 représente le schéma de principe d'un module de raccordement mis en oeuvre dans le dispositif de raccordement.
- les figures 4A et 4B représentent un schéma de réalisation du module de raccordement de la figure 3,
- la figure 5 représente un autre schéma de réalisation d'un module de raccordement,
- la figure 6 représente le principe de réalisation d'un ensemble de raccordement de grande capacité comprenant plusieurs modules de raccordement, utilisable dans le dispositif pour le raccordement d'un très grand nombre de lignes,
- la figure 7 représente le schéma de principe d'une variante du dispositif de raccordement comprenant un unique ensemble de raccordement mettant en oeuvre des commutateurs optiques à large bande passante.

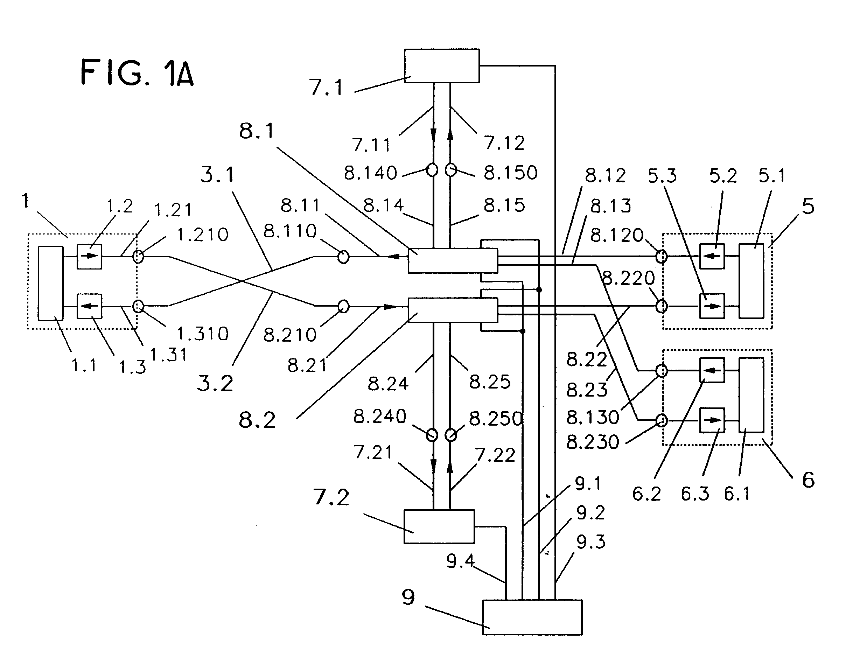

La figure 1A, de laquelle ont été exclus tous les éléments inutiles à la compréhension, notamment les différents organes qui constituent le central auquel sont raccordés les lignes optiques à large bande ainsi que les divers éléments composant les terminaux, décrit dans son principe le dispositif de raccordement au central de l'invention, dans le cas où les lignes optiques sont constituées chacune de deux fibres optiques acheminant chacune les signaux relatifs à un sens de la communication :

Dans cette figure, 1 est un terminal d'abonné placé chez l'abonné ou un joncteur de circuit d'un central distant, comprenant un ensemble de circuits électroniques 1.1 raccordé électriquement à un émetteur optoélectronique 1.2, tel une diode laser, raccordé à une fibre optique intermédiaire 1.21 et à un récepteur optoélectronique 1.3, tel une diode PIN, raccordé à une fibre optique intermédiaire 1.31, est raccordé par deux connecteurs optiques 1.210 et 1.310, équipant respectivement l'extrémité libre des fibres optiques intermédiaires 1.21 et 1.31, à deux fibres optiques 3.2 et 3.1 constituant la ligne optique raccordant au central le terminal, ou le joncteur de circuit d'un central distant.

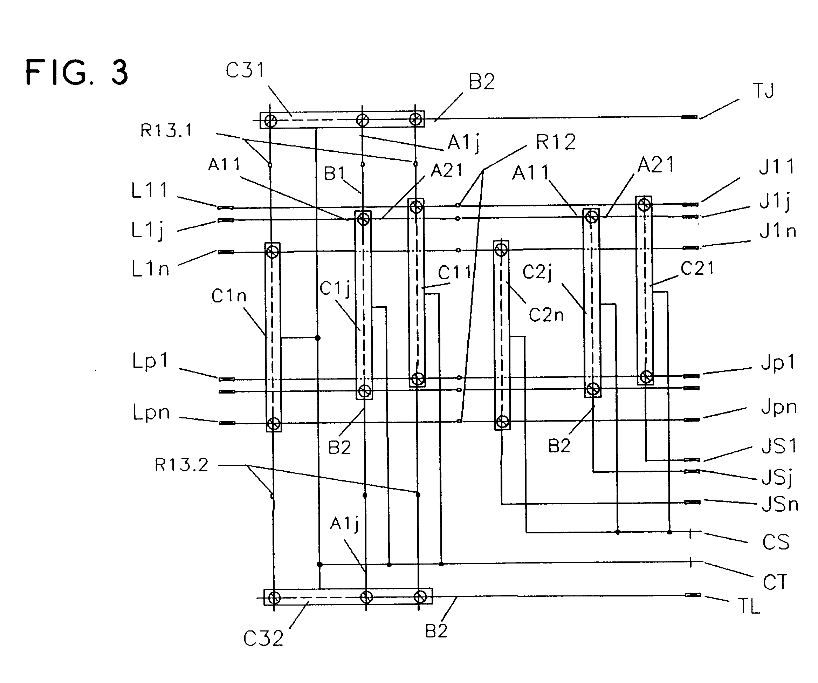

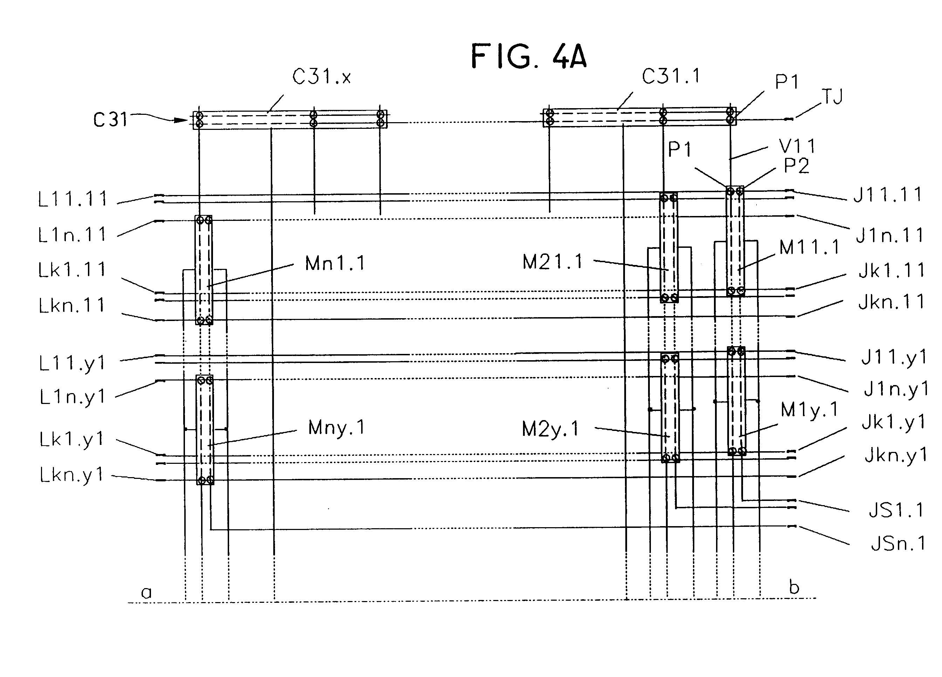

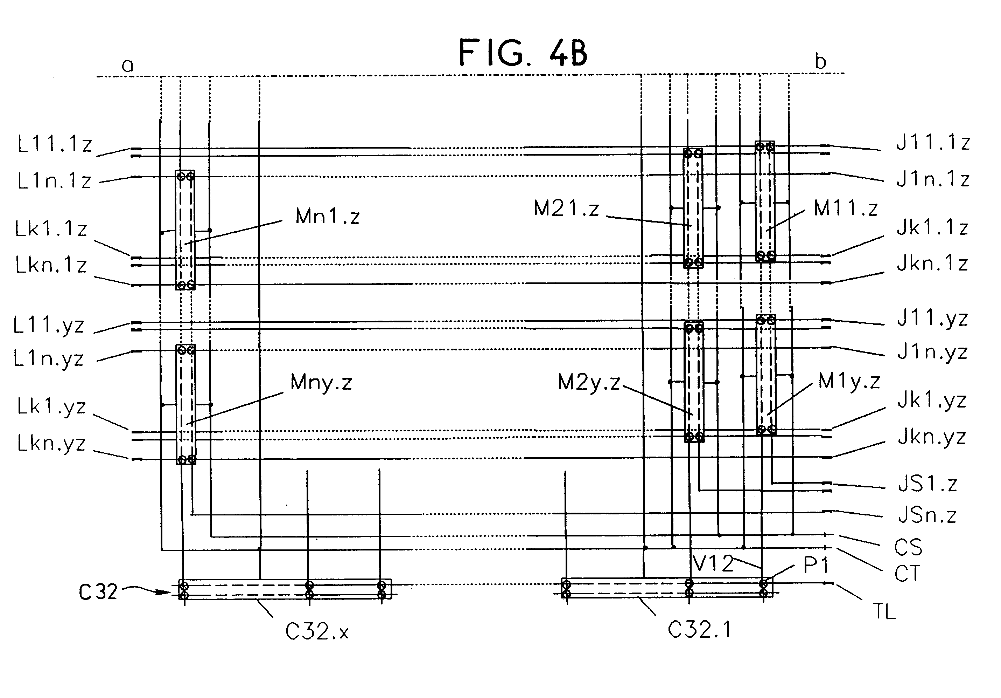

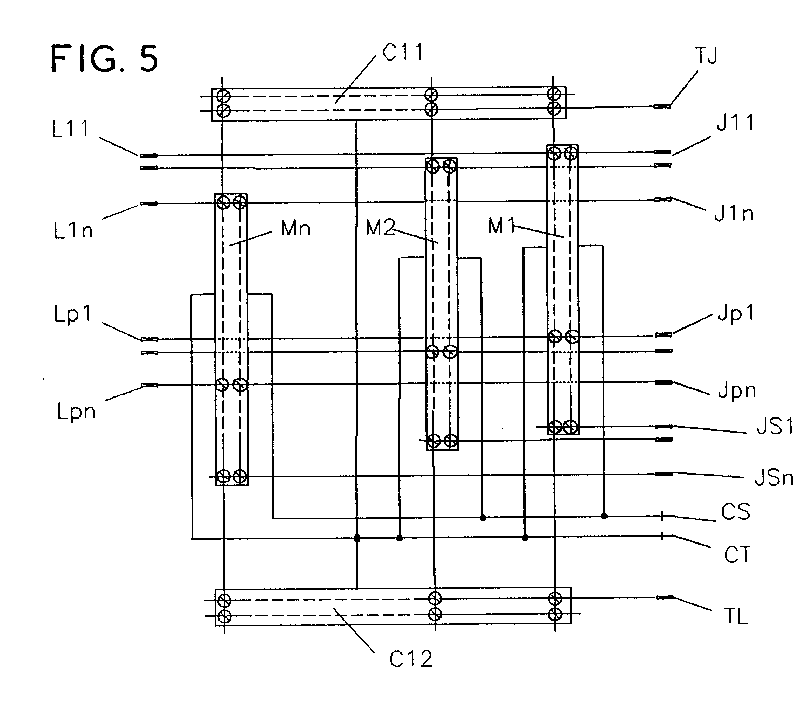

Dans le central, les fibres 3.1 et 3.2 sont respectivement raccordées à des connecteurs optiques 8.110 et 8.210 équipant l'extrémité de deux fibres intermédiaires 8.11 et 8.21 respectivement raccordées à deux ensembles de raccordement 8.1 et 8.2, comprenant chacun au moins un module de raccordement constitué de commutateurs optiques selon le montage de la figure 3, ou l'un des montages des figures 4A, 4B et 5.

Les dits ensembles de raccordement 8.1 et 8.2 sont d'autre part raccordés respectivement par les fibres intermédiaires 8.12 et 8.22 et les connecteurs 8.120 et 8.220 au joncteur 5 associé dans le central à la ligne optique formée des fibres 3.1 et 3.2, les dites fibres intermédiaires 8.12 et 8.22 étant respectivement raccordées à l'émetteur optoélectronique 5.2 et au récepteur optoélectronique 5.3 du joncteur, lesquels dispositifs optoélectroniques sont d'autre part électriquement raccordés au circuit électronique 5.1 équipant le joncteur pour son raccordement aux autres équipements, non représentés, du central.

Les deux dits ensembles de raccordement 8.1 et 8.2 sont par ailleurs raccordés par les fibres optiques 8.13 et 8.23 et les connecteurs optiques 8.130 et 8.230 respectivement aux émetteur et récepteur optoélectroniques 6.2 et 6.3 du joncteur de secours 6, lesquels émetteur et récepteur optoélectroniques sont par ailleurs raccordés électriquement à un circuit électronique 6.1 équipant le joncteur pour son raccordement aux autres équipements, non représentés, du central.

Les deux dits ensembles de raccordement 8.1 et 8.2 sont aussi raccordés, d'une manière identique à celle décrite ci-dessus, à une multiplicité d'autres lignes optiques de raccordement d'abonnés ou de transport et aux joncteurs qui leur sont associés, ainsi qu'à une multiplicité de joncteurs de secours, non représentées sur la figure.

Le dit ensemble de raccordement 8.1 est par ailleurs raccordé, par les deux fibres optiques 8.14 et 8.15 et les connecteurs optiques 8.140 et 8.150, aux fibres optiques 7.11 et 7.12 d'accès du circuit de test d'émission 7.1, et le dit ensemble de raccordement 8.2, par les deux fibres optiques 8.24 et 8.25 et les connecteurs optiques 8.240 et 8.250, aux fibres optiques 7.21 et 7.22 d'accès du circuit de test en réception 7.2. Les dits circuits de test d'émission et de test en réception comprennent chacun un dispositif de test de ligne et un dispositif de test de joncteur, contrôlés par un dispositif de commande et non représentés dans leur détail, dispositifs de test dont les accès optiques sont respectivement raccordés aux fibres optiques 7.11, 7.21 et 7.12, 7.22.

Les dits ensembles de raccordement 8.1, 8.2 sont aussi raccordés par les liaisons électriques 9.1 et 9.2 à un circuit de commande 9 du dispositif de raccordement, et les dispositifs de commande des circuits de test 7.1 et 7.2 sont aussi respectivement raccordés par les liaisons électriques 9.3 et 9.4 au dit circuit de commande 9, lui même raccordé aux organes de commande du central, non représentés.

Les liaisons électriques 9.1 acheminent les ordres d'aiguillage des commutateurs pour la mise en test des lignes et joncteurs optiques, les liaisons électriques 9.2 les ordres d'aiguillage des commutateurs pour le raccordement des lignes optiques aux joncteurs de secours, et les liaisons électriques 9.3 et 9.4 les ordres de commande et les signalisations des circuits de test.

La transmission bidirectionnelle entre les terminaux d'abonnés ou les joncteurs des liaisons de transport et les joncteurs associés du central, utilise deux signaux optiques distincts, un par sens de transmission,
- le signal correspondant à la transmission du central vers l'abonné, émis par l'émetteur 5.2 du joncteur, transitant par la fibre intermédiaire 8.12, le premier ensemble de raccordement 8.1, la fibre intermédiaire 8.11, la fibre optique 3.1 et la fibre intermédiaire 1.31 jusqu'au récepteur optoélectronique 1.3 du terminal d'abonné,
- le signal correspondant à la transmission de l'abonné vers le central, émis par l'émetteur 1.2 du terminal d'abonné, transitant par la fibre intermédiaire 1.21, la fibre optique 3.2, la fibre intermédiaire 8.21, le second ensemble de raccordement 8.2 et la fibre intermédiaire 8.22 jusqu'au récepteur optoélectronique 5.3 du joncteur.

Selon un mode de réalisation préféré de l'invention, la transmission dans le sens "central vers abonné" utilise un signal optique de 1300 nm de longueur d'onde et la transmission dans le sens "abonné vers central" un signal optique de 1550 nm de longueur d'onde, longueurs d'onde sur lesquelles sont respectivement accordés les émetteurs tels que 5.2 et 6.2 et les récepteurs tels que 1.3 d'une part, et les émetteurs tel que 1.2 et les récepteurs tels que 5.3 et 6.3 d'autre part.

Les éléments optoélectroniques d'émission et de réception du circuit de test 7.1, auxquels sont respectivement raccordées les fibres 8.14 et 8.15, sont accordées sur 1300 nm, et les éléments optoélectroniques d'émission et de réception du circuit de test 7.2, auxquels sont respectivement raccordées les fibres 8.24 et 8.25, sont accordés sur 1550 nm. Les ensembles de raccordement 8.1 et 8.2 ont des bandes passantes optiques respectivement comprises entre 1285 nm et 1330 nm d'une part et 1520 nm et 1570 nm d'autre part.

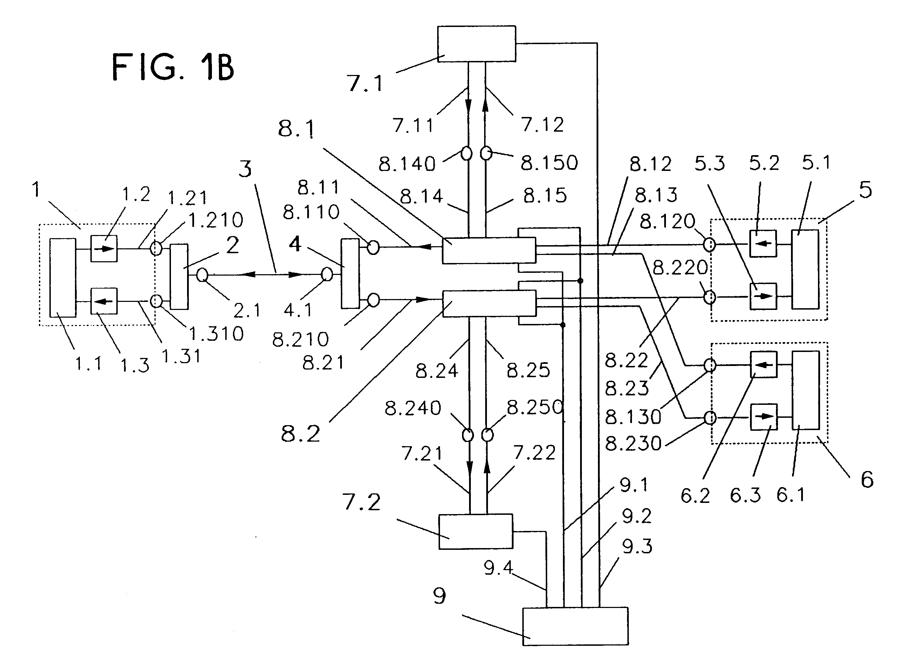

La figure 1B, décrit dans son principe le dispositif raccordement au central de l'invention, dans le cas où les lignes optiques sont constituées chacune d'une seule fibre optique acheminant les signaux relatifs aux deux sens de la communication.

Le dispositif décrit est identique à celui de la figure 1A, sauf en ce qui concerne la ligne de raccordement du terminal 1 au central, qui est constituée dans la présente figure 1B, d'une seule fibre optique 3 au lieu des fibres optiques 3.1 et 3.2 de la figure 1A, ladite fibre optique 3 acheminant les signaux optiques des deux sens de la communication, fibre dont les extrémités sont raccordées, respectivement par l'intermédiaire des connecteurs optiques 2.1 et 4.1 à des duplexeurs optiques 2 et 4 réalisant l'aiguillage des signaux optiques de chacun des sens de la communication, duplexeurs dont les autres accès sont respectivement raccordés aux connecteurs 1.210, 1.310 et 8.110, 8.210 précédemment décrits.

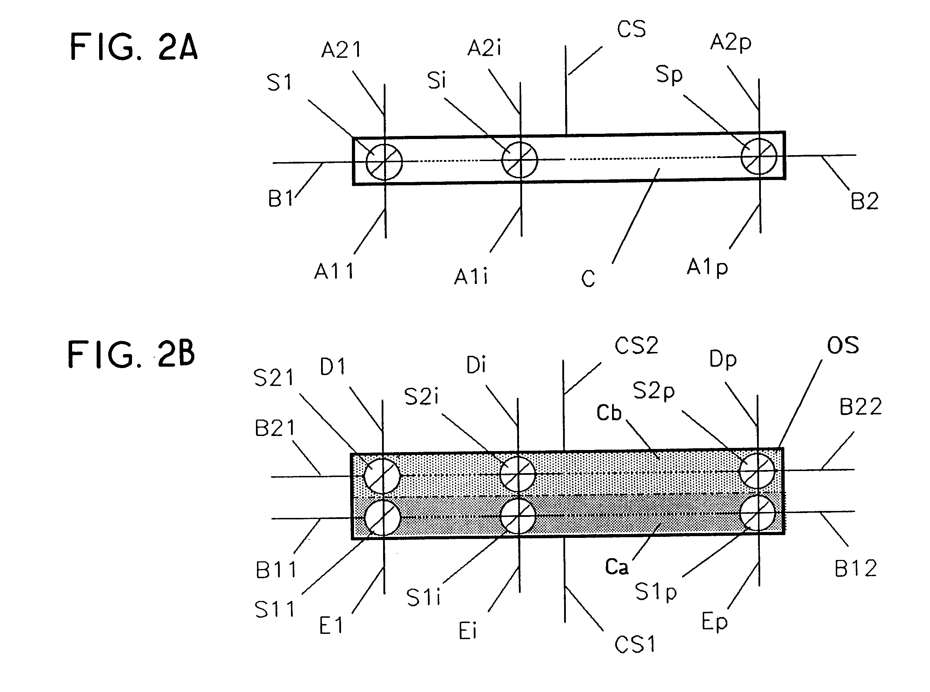

La figure 2A représente dans son principe un commutateur optique C utilisé dans le dispositif de raccordement et comprenant p points de connexion S1, Si, Sp assemblés en série par rapport à un conduit optique d'extrémités B1 et B2, et comportant chacun deux autres accès A11-A21, A1i-A2i, A1p-A2p, et aptes à établir individuellement, sous l'effet de signaux électriques de commande présentés par les lignes de commande CS, soit une première double connexion A1i-A2i, B1-B2 correspondant à l'état repos du point de connexion, soit une seconde double connexion A1i-B2, B1-A2i correspondant à l'état travail du point de connexion.

Le dit commutateur C peut être commandé selon deux modes, un premier mode dit "en simple sélection" qui établit par activation d'un seul point de connexion Si une seule seconde double connexion A1i-B2, B1-A2i dans le commutateur, et un second mode dit "en double sélection" qui, en activant simultanément deux points de connexion Si et Sj établit simultanément deux secondes connexions qui produisent une combinaison de trois chemins optiques A1i-A2j, B1-A2i et A1j-B2.

Selon un mode préféré de réalisation de l'invention, deux commutateurs Ca, Cb tels que le commutateur C décrit ci-dessus et représenté figure 2A, sont assemblés par raccordement des accès A2i du premier aux accès A1i du second, pour constituer une matrice optique OS, représentée en figure 2B, ayant un premier ensemble de P paires d'accès optiques associés Ei, Di, un second ensemble de deux paires d'accès optiques B11-B21, B12-B22 et deux ensembles de lignes électriques de commande CS1 et CS2 commandant respectivement le premier Ca et le second Cb commutateurs constituant la matrice.

Le commutateur optique C ou la matrice optique OS peuvent être réalisés par assemblage de points de connexion optique connus tels des coupleurs électro-optiques 2x2 dont il existe de nombreux modèles commercialisés, ou selon le mode préféré de réalisation du dispositif de raccordement, par intégration sur niobate de lithium des conduits optiques et coupleurs électro-optiques constituant le commutateur ou la matrice, les accès aux conduits étant constitués de fibres optiques amorces assemblées aux guides optiques intégrés.

La figure 3 décrit dans son principe un module de raccordement constitué de commutateurs optiques eux mêmes constitués par des commutateurs C du type décrit ci-dessus en figure 2A, les dits ensembles de raccordement 8.1 et 8.2 des figures 1A et 1B comportant chacun au moins un module de raccordement.

Les commutateurs optiques sont répartis en plusieurs ensembles de commutateurs optiques décrits ci-après.

Un premier ensemble de commutateurs optiques est constitué par les commutateurs optiques C11,... C1n, au nombre de n, raccordés par chacun de leurs accès A1i à un connecteur optique Lij, lui-même raccordé à une fibre intermédiaire de ligne, telle la fibre 8.11 ou la fibre 8.21 de la figure 1A, et par leurs accès A2i aux accès A1i de n commutateurs optiques C21,... C2n d'un deuxième ensemble de commutateurs optiques dont chacun des accès A2i est raccordé à un connecteur optique Jij, lui-même raccordé à une fibre intermédiaire de raccordement de joncteur, telles les fibres intermédiaires 8.12 ou 8.22 de la figure 1A.

Les n commutateurs optiques du deuxième ensemble de commutateurs sont par ailleurs chacun raccordés par leur accès B2 à un connecteur optique JSj lui-même raccordé à une fibre intermédiaire d'accès à un joncteur de secours, telles les fibres intermédiaires 8.13 ou 8.23 de la figure 1A.

Des commutateurs optiques C31 et C32 constituant un troisième ensemble de commutateurs optiques, sont raccordés par chacun de n de leurs accès A1j, respectivement, à l'accès B1 et à l'accès B2 d'un commutateur C1j du premier ensemble de commutateurs optiques, et par leur accès B2, respectivement, à des connecteurs optiques TJ et TL raccordables, le premier à la ligne de test de joncteurs et le second à la ligne de test de lignes décrites ci-dessus.

Les différents commutateurs optiques constituant le module de raccordement sont raccordés entre eux par épissurage des fibres amorces d'accès, ou par le moyen de connecteurs optiques montés sur les fibres amorces, raccordements repérés R12, R13.1 et R13.2 sur la figure 3.

Les lignes de commandes des différents commutateurs sont regroupées en deux groupes de lignes de commande CT et CS correspondant respectivement à la commande des sélections de test et à la commande des connexions de ligne sur joncteur de secours.

Dans la figure 3, p étant le nombre des points de connexion d'un commutateur C et n le nombre des commutateurs des premier et deuxième ensembles de commutateurs, avec n inférieur ou égal à p, le nombre N1 de lignes optiques pouvant être sécurisées par le module de raccordement est égal au produit (n.p) . Le nombre des joncteurs de secours est n.

Chaque joncteur de secours est associé à un groupe de p lignes optiques.

Le nombre maximal de commutateurs des premier et deuxième ensembles de commutateurs pouvant être équipés est égal à p. Le nombre maximal Nml de lignes pouvant être sécurisées par le module de raccordement, est égal à p². Le nombre maximal de joncteurs de secours est égal à p, chaque joncteur de secours étant associé à un groupe de p lignes optiques.

La figure 3 n'est évidemment qu'un schéma de principe permettant de présenter simplement un module de raccordement du dispositif de l'invention.

Le montage réel, tel celui représenté par les figures 4A et 4B assemblées selon la ligne a b, utilise des matrices optiques OS intégrant deux commutateurs Ca et Cb selon les dispositions décrites par la figure 2B et possédant chacun k points de connexion : dans les figures 4A et 4B, M11.1,..., Mny.z, sont des matrices optiques dont les premier et deuxième commutateurs Ca et Cb sont respectivement utilisés pour réaliser lesdits premier et deuxième ensembles de commutateurs, et C31.1 à C31.x, C32.1 à C32.x, sont des matices optiques dont seul le premier commutateur Ca est utilisé pour réaliser le dit troisième ensembles de commutateurs, qui est constitué par deux assemblages C31, C32 de matrices optiques.

Chacun des dits premier, deuxième et troisième ensembles de commutateurs est réalisé en assemblant en série plusieurs matrices optiques, soit x matrices pour chacun des assemblages C31 et C32 du troisième ensemble de commutateurs, et (y.z) matrices pour chacun des au plus n = (x.k) assemblages constituant lesdits premier-deuxième ensembles de commutateurs :

Pour les dits premier et troisième ensembles de commutateurs, l'accès B12 de la matrice de rang r d'un assemblage est raccordé à l'accès B11 de la matrice de rang r+1, les accès B11 de la première matrice et B12 de la dernière matrice de l'assemblage appartenant au dit premier ensemble de commutateurs étant respectivement raccordés à l'accès A1i (accès Ei des matrices) de rang correspondant des assemblages C31 et C32, les accès Ei et Di de chacune des matrices formant lesdits premier-deuxième ensembles de commutateurs étant raccordés respectivement à un connecteur optique L et un connecteur optique J, les accès B12 respectifs des dernières matrices des assemblages C31 et C32 du dit troisième ensemble de commutateurs étant respectivement raccordés à des connecteurs optiques TJ et TL comme décrit précédemment.

D'autre part, pour le dit deuxième ensemble de commutateurs, sont constitués z assemblages élémentaires de chacun y matrices dans chacun desquels l'accès B22 de la matrice optique de rang r est raccordé à l'accès B21 de la matrice optique de rang r+1, l'accès B22 de la dernière matrice optique de chaque assemblage élémentaire étant raccordé à un connecteur optique JS, décrit précédemment.

Le nombre z des assemblages élémentaires est tel que le produit (n.z) soit au moins égal au nombre s des joncteurs de secours nécessaires à la sécurisation des lignes, le nombre s étant déterminé en fonction de la qualité de service recherchée, de la fiabilité des équipements et de la fréquence admise des interventions de maintenance.

Le nombre maximal Nm2 des lignes pouvant être sécurisées par le module de raccordement est Nm2 = (n.y.z.k) = (x.y.z.k²) et le nombre maximal de joncteurs de secours pouvant être raccordés est s = (n.z) = (x.k.Z), chacun des joncteurs de secours étant associé à un groupe de (y.k) lignes optiques.

Ce montage permet donc un dimensionnement très souple du dispositif de sécurisation.

Il permet aussi d'optimiser l'affaiblissement créé par les points de connexions insérés sur les chemins optiques des lignes de test et de secours en diminuant le nombre des points de connexion insérés : par exemple, le nombre maximal des points de connexion insérés sur un chemin optique de test dans le dispositif est égal à k.(x+(y.z)) alors qu'il serait égal à (x.y.z.k²) si le dispositif ne mettait en oeuvre qu'un seul sélecteur d'accès au dispositif de test raccordé à toutes les lignes.

Les lignes de commandes des différents commutateurs sont regroupées en deux groupes de lignes de commande CT et CS correspondant respectivement à la commande des sélections de test et à la commande des connexions de ligne sur joncteur de secours, lesquels sont respectivement raccordés aux lignes électriques de commande 9.1 et 9.2 des figures 1A et 1B.

A partir des mêmes éléments, un autre agencement des commutateurs constituant un module de raccordement peut être réalisé, dont le principe est représenté figure 5.

Toutes les dispositions constructives concernant les dits premier et troisième ensembles de commutateurs sont les mêmes que celles décrites précédemment. Seules changent les dispositions constructives concernant les raccordements des joncteurs de secours au dit deuxième ensemble de commutateurs : au lieu d'être raccordés à l'accès B22 des dernières matrices de chacun des z assemblages élémentaires constituant les dits deuxièmes ensembles de commutateurs, les joncteurs de secours sont raccordés au dernier accès Dp (figure 2B) de ces mêmes dernières matrices par l'intermédiaire de connecteurs optiques JS.

Cet agencement permet d'utiliser comme joncteurs de secours, soit le dernier joncteur de chacun des groupes de joncteurs constituant un ensemble d'une multiplicité de groupes de joncteurs, soit les joncteurs du dernier groupe du dit ensemble d'une multiplicité de groupes de joncteurs, les joncteurs utilisés comme joncteurs de secours n'étant pas dans ce cas associés chacun à une ligne optique particulière.

Reprenant les notations définies précédemment pour les figures 4A et 4B, le nombre N3 de lignes optiques pouvant être sécurisées par le module de raccordement est égal à (x.y.z.(k-1).k), et le nombre maximal de joncteurs de secours pouvant être raccordés est s = (x.k.z), chacun des joncteurs de secours étant associé à un groupe de y. (k-1) lignes optiques.

La connexion d'un joncteur de secours à une ligne secourue s'effectue par double sélection dans le commutateur concerné du deuxième ensemble, comme il a été décrit précédemment.

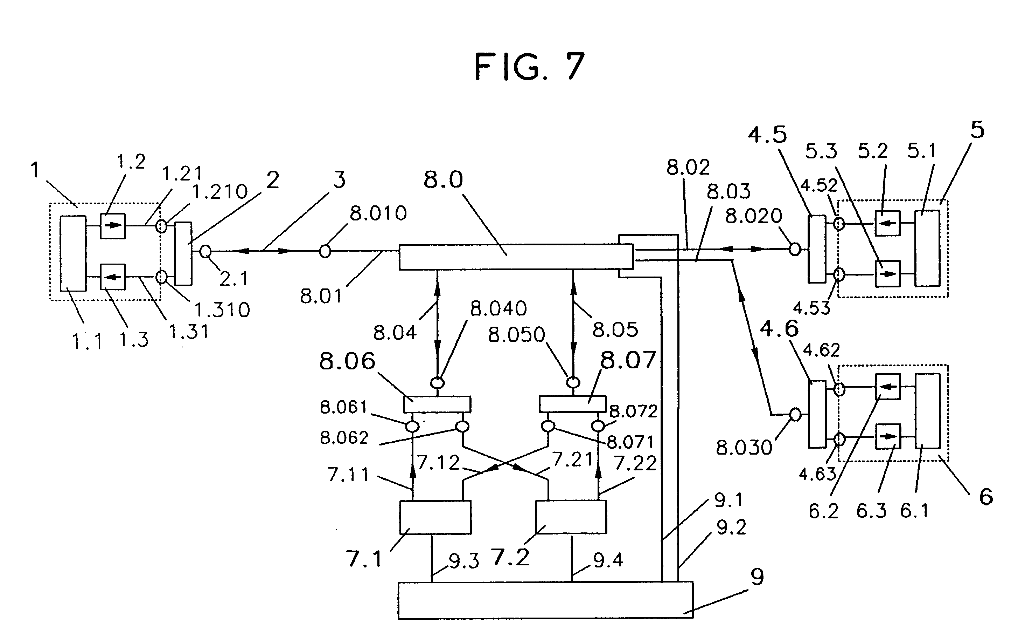

Dans les applications les plus fréquentes de l'invention les ensembles de raccordement 8.1 et 8.2 des figures 1A et 1B, et 8.0 de la figure 7 comprennent chacun un seul module de raccordement raccordé à des connecteurs TJ et TL qui sont directement raccordés aux fibres d'accès des circuits de test.

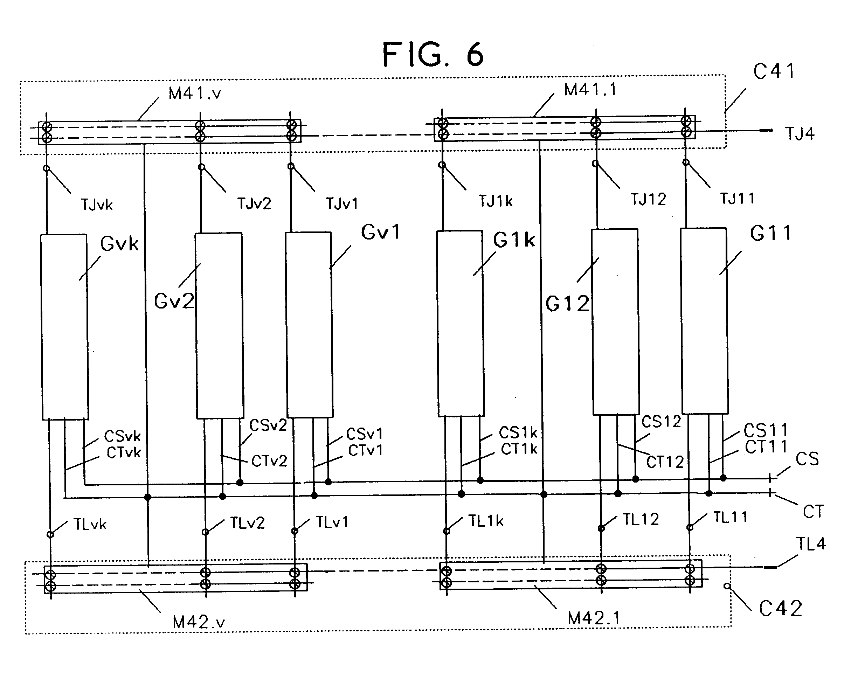

La figure 6 représente le principe de réalisation d'un ensemble de raccordement de grande capacité pouvant raccorder un très grand nombre de lignes.

Plusieurs modules de raccordement (G11,...,Gvk), tels que ceux décrits figures 3, 4A, 4B, ou 5, sont raccordés par leurs accès TJ et TL, (TJ11,...,TJvk et TL11,..., TLvk) à un quatrième ensemble de commutateurs optiques constitué par deux assemblages C41 et C42, de v matrices optiques M41.1...,M41.v et M42.1,...,M42.v chacun, ces assemblages étant semblables aux assemblages C31, C32 constituant le troisième ensemble de commutateurs des figures 4A et 4B.
- lesquels accès TJ sont chacun raccordé à un accès Ei d'une des matrices M41.1 à M41.v constituant le premier assemblage C41 du quatrième ensemble de commutateurs optiques,
- lesquels accès TL sont chacun raccordé à un accès Ei d'une des matrices M42.1 à M42.v constituant le second assemblage C42 du quatrième ensemble de commutateurs optiques,
- lesquels assemblages C41 et C42 sont respectivement raccordés depuis les accès B12 des matrices optiques M41.1 et M42.1 à des connecteurs TJ4 et TL4 d'accès aux lignes de test.

Les lignes de commande des différents commutateurs sont regroupées dans les faisceaux CS et CT raccordés au circuit de commande comme précédemment décrit.

Si v est le nombre de matrices optiques constituant un quatrième ensemble de commutateurs, le nombre maximal des lignes pouvant être sécurisées par le dispositif est soit :
Nm4 = (x.y.z.v.k.k²), dans le cas où les modules de raccordement sont du type des figures 4A et 4B, le nombre maximal de joncteurs de secours pouvant être raccordés étant
sm4 = x.k².z.v), chacun des joncteurs de secours étant associé à un groupe de (y.k) lignes optiques, soit
Nm5 = (x.y.z.v.(k-1).k²), dans le cas ou les modules de raccordement sont du type défini par la figure 5, le nombre maximal de joncteurs de secours pouvant être raccordés étant
sm5 = (x.k².z.v), chacun des joncteurs de secours étant associé à un groupe de y.(k-1) lignes optiques.

La figure 7 décrit un autre agencement du dispositif selon l'invention, mettant en oeuvre des commutateurs optiques à large bande passante optique (s'étendant par exemple de 1285 nm à 1570 nm), aptes à transmettre les signaux optiques relatifs aux deux sens de transmission des lignes optiques et utilisables pour le raccordement de lignes optiques constituées chacune d'une fibre optique unique.

Les fibres uniques 3 constituant les lignes sont raccordées côté central par des connecteurs 8.010 et des fibres intermédiaires 8.01 à un ensemble de raccordement unique 8.0 comprenant au moins un module de raccordement, organisé comme décrit précédemment par les figures 3, 4A, 4B, 5 ou 6, lequel ensemble de raccordement est aussi raccordé par des fibres intermédiaires 8.02 et des duplexeurs optiques 4.5 aux joncteurs 5 associés aux lignes optiques 3, par des fibres optiques 8.03 et des duplexeurs optiques 4.6 à des joncteurs de secours 6, par une fibre 8.04 à un duplexeur 8.06 dont les autres accès sont respectivement raccordés aux fibres 7.11 et 7.21 et par une fibre 8.05 à un duplexeur 8.07 dont autres accès sont respectivement raccordés aux fibres 7.12 et 7.22, les dites fibres 7.11 et 7.12 étant les fibres d'accès au circuit de test d'émission 7.1 déjà décrit et les fibres 7.21 et 7.22 étant les fibres d'accès au circuit de test de réception 7.2 déjà décrit.

L'invention sera mieux comprise par la description ci-après, donnée à titre d'exemple, du fonctionnement du dispositif de la figure 1A, dont les ensembles de raccordement 8.1 et 8.2 sont supposés comporter chacun un seul module de raccordement du type illustré par les figures 4A et 4B.

En procédure de routine, un test de bon fonctionnement de chacune des liaisons optiques est effectué cycliquement en période de faible trafic, période déterminée par les organes de commande du central, sous le contrôle des moyens généraux de supervision et de maintenance du central, lesquels peuvent être situés dans le central ou regroupés dans un centre de maintenance distinct du central, test qui comprend les opérations suivantes :
- vérification de l'inactivité de la ligne optique à tester par interrogation des organes de commande du central,
- envoi au circuit de commande 9 (figure 1A), par les moyens généraux de supervision et maintenance du central, de l'ordre de test de la ligne, comprenant l'adresse de la dite ligne,
- calcul par le circuit de commande 9 de l'adresse des points de connexion concernés dans les ensembles de raccordement 8.1 et 8.2,
- émission par le dit circuit de commande 9 sur les liaisons électriques 9.1 des dites adresses des points de connexion,
- dans chacun des deux ensembles de raccordement 8.1 et 8.2, orientation des points de connexion concernés dans les premier et troisième ensembles de commutateurs selon le processus suivant : on suppose qu'il s'agit de tester la liaison optique raccordée comme il a été précédemment décrit à la liaison L11.11 des figures 4A et 4B, deux adresses sont simultanément présentées sous la forme de signaux électriques sur la liaison CT raccordée à la liaison 9.1 ; la première adresse commande simultanément les points de connexion P1 des matrices optiques C31.1 et C32.1 du troisième ensemble de commutateurs qui établissent respectivement une continuité optique entre TJ et V11 d'une part et TL et V12 d'autre part ; la seconde adresse commande le point de connexion P1 de la matrice optique M11.1 qui interrompt la continuité optique entre L11.11 et J11.11 et établit deux nouvelles continuités optiques entre L11.11 et V12 d'une part et J11.11 et V11 d'autre part ; ainsi par les nouveaux chemins optiques établis, L11.11 est optiquement raccordé à TL et J11.11 est optiquement raccordé à TJ,
- test : le processus précédent ayant été effectué dans chacun des ensembles de raccordement 8.1 et 8.2 (figure 1A), la ligne optique en test et le joncteur associé sont donc optiquement raccordés aux circuits de test émission 7.1 et réception 7.2 auxquels le circuit de commande 9 émet respectivement par les liaisons 9.3 et 9.4 les ordres d'activation des tests et en reçoit les signaux de résultats ;
le circuit 7.1 contrôle d'une part en réception le dispositif d'émission 5.2 du joncteur 5 mis en test, et indépendamment en émission la ligne optique 3 et les dispositifs de réception 1.3 du terminal d'abonné 1 ;
le circuit 7.2 contrôle d'une part en émission le dispositif de réception 5.3 du joncteur 5 mis en test, et indépendamment en réception la ligne optique 3 et les dispositifs d'émission 1.2 du terminal d'abonné 1 ;
- déconnexion de la ligne testée : les séquences de test étant terminées, le circuit de commande 9 émet simultanément aux deux ensembles de raccordement 8.1 et 8.2 de nouveaux signaux d'adresses concernant les points de connexion précédemment activés, lesquels points sont dès lors positionnés dans leur état initial tel que les continuités optiques L11.11 à TL d'une part et J11.11 à TJ d'autre part sont rompues et qu'est rétablie la continuité optique L11.11 à J11.11. Par ce processus, la ligne optique en fin de test est de nouveau raccordée à son joncteur et disponible pour une activité.
- signalisation : un message de fin de test de ligne est alors émis par le circuit de commande 9 aux moyens généraux de supervision et maintenance du central qui peuvent dès lors entreprendre le test d'une autre ligne en renouvelant la procédure sus-décrite.

Si un défaut est constaté sur une liaison par d'autres dispositifs supervisant les lignes en activité, les moyens généraux de supervision et maintenance du central, dans le cadre d'une procédure de localisation d'avarie, commandent une mise en test de la ligne concernée, qui se déroule selon la procédure décrite ci-dessus.

Si, lors d'un test systématique ou lors d'une procédure de localisation d'avarie, un joncteur de ligne est détecté défectueux, une procédure de basculement de la ligne optique concernée sur joncteur de secours est entreprise, dans la mesure ou le joncteur de secours concernant le groupe de liaisons auquel appartient le joncteur défectueux est disponible.

Le basculement s'opère selon la procédure suivante : supposant que le joncteur raccordé à J11.11 de la figure 4 soit détecté comme étant défectueux, le circuit de commande 9 (figure 1A) ayant reçu des moyens généraux de supervision et maintenance du central l'ordre de basculement, émet sur les liaisons électriques 9.2 l'adresse du point de connexion concerné dans chacun des ensembles de raccordement 8.1 et 8.2, c'est-à-dire dans l'exemple choisi l'adresse du point de connexion P2 de la matrice optique M11.1 du module de raccordement de chacun des ensembles de raccordement. Cette adresse, reçue sur la liaison CS du module de raccordement figures 4A et 4B, commande le point de connexion P2 de M11.1 de telle sorte que la continuité optique entre L11.11 et J11.11 soit interrompue et que soit établie la continuité optique entre L11.11 et JS1.1, donc entre la ligne optique concernée et le joncteur de secours du groupe à laquelle la ligne appartient.

La réparation du joncteur nominal de la liaison optique raccordé à J11.11 ayant été effectuée, la liaison nominale est rétablie en envoyant au point de connexion P2 par les chemins déjà décrits l'ordre de rompre le chemin optique L11.11 à JS1.1 et d'établir le chemin optique L11.11 à J11.11.

Il faut remarquer que la liaison optique, incluant la ligne et le joncteur de secours, peut être testée selon la procédure normale précédemment décrite, par basculement des points de connexion P1 des matrices optiques C31.1, C32.1 et M11.1, la ligne optique se trouvant dès lors raccordée à TL et le joncteur de secours à TJ.

Il faut aussi remarquer que dès lors qu'ils ne sont raccordés à aucune ligne ni joncteur par le premier ensemble de commutateurs optiques, les circuits de test 7.1 et 7.2 peuvent chacun être mis eux-mêmes en test, en raccordant leur circuit d'émission à leur circuit réception par l'intermédiaire des premier, troisième et éventuellement quatrième ensembles de commutateurs optiques, ce qui permet par ailleurs de tester les dits commutateurs.

Le dispositif de l'invention permet, par la grande modularité des assemblages de commutateurs qu'il met en oeuvre et les facilités de configuration qui en découlent, d'optimiser :
- le nombre des moyens de test nécessaires,
- le nombre des joncteurs de secours équipés,
- le nombre des points de connexion et des épissures de raccordement insérés dans les chemins optiques de test et de sécurisation et conséquemment les affaiblissements des dits chemins, évitant ainsi de devoir équiper les dispositifs de test et les joncteurs de secours de moyens d'émission et de réception optiques différents de ceux qui équipent les joncteurs de ligne.

Le dispositif permet par ailleurs le test des liaisons optiques raccordées à des joncteurs de secours sans devoir modifier les procédures de test nominales.

Le dispositif permet l'autotest des dispositifs de test par raccordement des circuits d'émission sur les circuits réception pour chaque circuit de test.

Il marque ainsi un réel progrès en regard de l'art antérieur pour l'équipement des systèmes de communication à large bande, tant par ses caractéristiques de modularité, qui permettent de sécuriser des dispositifs de raccordement de lignes optiques de taille très variable, que par la possibilité qu'il offre de contrôler les liaisons en état de secours, facilité qui améliore le service offert et la gestion de la maintenance.

## Revendications

1. Dispositif de raccordement au central des lignes optiques raccordant des abonnés et des centres de commutation au central, dans un réseau de télécommunications multiservices à large bande, tels les réseaux BISDN et les réseaux de télédistribution commutés, chaque ligne optique reliée à un abonné étant raccordée d'une part à un circuit d'émission et à un circuit de réception d'un terminal d'abonné chez l'abonné, et d'autre part à un circuit d'émission et à un circuit de réception d'un joncteur du central, chaque ligne optique reliée à un centre de commutation étant raccordée d'une part à un circuit d'émission et à un circuit de réception d'un joncteur de circuit dudit centre et d'autre part à un circuit d'émission et à un circuit de réception d'un joncteur du central, ledit central comportant également des joncteurs de secours, caractérisé par le fait que les lignes optiques sont reliées aux joncteurs (5) du central et à des joncteurs de secours (6) par au moins un ensemble de raccordement (8) comportant au moins un module de raccordement ayant une capacité de raccordement de N lignes optiques, qu'un module de raccordement comporte un premier (C11 à C1n), un deuxième (C21 à C2n) et un troisième (C31, C32) ensembles de commutateurs optiques, et que dans un module de raccordement le premier ensemble de commutateurs optiques est raccordé aux lignes optiques, le deuxième ensemble de commutateurs optiques est raccordé d'une part au premier ensemble de commutateurs optiques et d'autre part aux joncteurs (5) et aux joncteurs de secours (6) associés aux N lignes optiques et le troisième ensemble de commutateurs optiques est raccordé d'une part au premier ensemble de commutateurs optiques et d'autre part à au moins un circuit de test (7.1) par une fibre optique (7.11) de test de ligne, et par une fibre optique (7.12) de test de joncteur.

2. Dispositif de raccordement selon la revendication 1, caractérisé par le fait que les lignes optiques sont reliées aux joncteurs (5) du central et aux joncteurs de secours (6) par un seul ensemble de raccordement (8.0) acheminant les signaux optiques des deux sens d'une communication, que chaque ligne optique est constituée par une seule fibre optique acheminant les signaux optiques des deux sens d'une communication, que chaque joncteur (5) et chaque joncteur de secours (6) est relié au deuxième ensemble de commutateurs optiques (C21 à C2n) par un duplexeur (4. 5 ; 4. 6) et une seule fibre optique (8.02 ; 8.03), et que l'ensemble de raccordement est relié par la fibre optique de test de ligne (8.04) et un duplexeur (8.06) à un circuit de test d'émission (7.1) et à un circuit de test de réception (7.2) et par la fibre optique de test de joncteur (8.05) et un autre duplexeur (8.07) audit circuit de test d'émission et audit circuit de test de réception.

3. Dispositif de raccordement selon la revendication 1, caractérisé par le fait qu'il comporte un premier (8.1) et un deuxième (8.2) ensembles de raccordement affectés chacun a un sens de communication, que chaque circuit d'émission (5.2 ; 6.2) des joncteurs (5) et des joncteurs de secours (6) est relié par une fibre émission (8.12 ; 8.13) au premier ensemble de raccordement (8.1), que chaque circuit de réception (5.3; 6.3) des joncteurs (5) et des joncteurs de secours (6) est relié par une fibre réception (8.22 ; 8.23) au deuxième ensemble de raccordement (8.2), que chaque ligne optique est constituée par une seule fibre optique (3) reliée aux deux ensembles de raccordement par un duplexeur (4), que chaque ensemble de raccordement est relié par une fibre optique (8.11 ; 8.21) audit duplexeur (4), et que le premier ensemble de raccordement (8.1) est relié à un circuit de test d'émission (7.1), le deuxième ensemble de raccordement (8.2) étant relié à un circuit de test de réception (7.2).

4. Dispositif de raccordement selon la revendication 1, caractérisé par le fait qu'il comporte un premier (8.1) et un deuxième (8.2) ensembles de raccordement affectés chacun à un sens de communication, que chaque circuit d'émission (5.2 ; 6.2) des joncteurs (5) et des joncteurs de secours (6) est relié par une fibre optique émission au premier ensemble de raccordement (8.1), que chaque circuit de réception (5.3 ; 6.3) des joncteurs (5) et des joncteurs de secours (6) est relié par une fibre optique réception au deuxième ensemble de raccordement (8.2), que les lignes optiques sont constituées chacune par une première (3.1) et une deuxième (3.2) fibres optiques, que chaque circuit de réception (1.3) des terminaux d'abonnés et des joncteurs de circuit est relié par la première fibre optique (3.1) d'une ligne optique au premier ensemble de raccordement (8.1), que chaque circuit d'émission (1.2) des terminaux d'abonnés et des joncteurs de circuit est relié par la deuxième fibre optique (3.2) d'une ligne optique au deuxième ensemble de raccordement (8.2), et que le premier ensemble de raccordement (8.1) est relié à un circuit de test d'émission (7.1), le deuxième ensemble de raccordement (8.2) étant relié à un circuit de test de réception (7.2).

5. Dispositif de raccordement selon la revendication 1, caractérisé par le fait qu'un ensemble de raccordement comporte plusieurs modules de raccordement (G11 à Gvk) et un quatrième ensemble de commutateurs optiques (C41, C42), que le troisième ensemble de commutateurs optiques de chacun des modules de raccordement est relié au quatrième ensemble de commutateurs optiques, et que ledit quatrième ensemble de commutateurs optiques (C41, C42) est relié à au moins un circuit de test par ladite fibre optique de test de ligne et par ladite fibre optique de test de joncteur.

6. Dispositif de raccordement selon l'une des revendications 1 et 5, caractérisé par le fait que chaque ensemble de commutateurs optiques est constitué par des commutateurs optiques (C) ayant chacun deux groupes d'accès, le premier groupe d'accès comportant P paires d'accès formées d'un premier et d'un second accès normalement raccordés l'un à l'autre par des moyens internes du commutateur optique, le deuxième groupe d'accès comportant un premier et un deuxième accès respectivement raccordés aux premier et second accès de n'importe laquelle des P paires d'accès du premier groupe par des moyens interne du commutateur optique après rupture du raccordement interne des accès de la paire.

7. Dispositif de raccordment selon la revendication 1, caractérisé par le fait que le deuxième ensemble de commutateurs optiques est constitué par des commutateurs optiques ayant chacun deux groupes de P accès tels que les accès de même rang de chacun des deux groupes sont associés et raccordés l'un à l'autre par des moyens internes des commutateurs optiques et au moins une liaison interne par laquelle l'un quelconque des accès du premier groupe peut être raccordé à l'un quelconque des accès du deuxième groupe après rupture des raccordements internes respectifs de chacun des dits quelconques accès avec l'accès associé.

8. Dispositif de raccordement selon la revendication 1, caractérisé le fait qu'un commutateur optique des premier et deuxième ensembles de commutateurs optiques qui sont interconnectés entre eux, sont associés pour former une matrice optique (OS).

9. Dispositif de raccordement selon l'une des revendications 6 et 7, caractérisé par le fait que les commutateurs optiques des ensembles de raccordement sont raccordés par des lignes de commande (9. 1 ; 9. 2) à un circuit de commande (9) lui même raccordé à des moyens de commande du central, les circuits de test d'émission (7.1) et de réception (7.2) étant raccordés par des liaisons (9.3; 9.4) respectivement, audit circuit de commande (9).

## Claims

1. A system for connecting an exchange to optical subscriber lines and to optical junction lines in a wideband multiservice telecommunications network such as BISDN networks and switched remote distribution networks, each optical line connected to a subscriber being connected firstly to a transmission circuit and a reception circuit in a subscriber terminal located on subscriber premises and secondly to a transmission circuit and a reception circuit in a junctor of the exchange, each optical line connected to a junction being connected to a transmission circuit and a reception circuit in a junctor of a distant exchange and to a transmission circuit and a reception circuit of a junctor in the exchange, said exchange also including spare junctors, the system being characterized in that the optical lines are connected to the junctors (5) of the exchange and to its spare junctors (6) via at least one connection assembly (8) including at least one connection module having a connection capacity of N optical lines, in that a connection module comprises first, second, and third optical switch assemblies (C11 to C1n, C21 to C2n, and C31, C32), and in that, in the connection module, the first optical switch assembly is connected to the optical lines, the second optical switch assembly is connected both to the first optical switch assembly and to the junctors (5) and to the spare junctors (6) associated with the N optical lines, and the third optical switch assembly is connected both to the first optical switch assembly and to at least one test circuit (7.1) via a test line optical fiber (7.11) and via a junctor test optical fiber (7.12).

2. A connection system according to claim 1, characterized in that the optical lines are connected to the junctors (5) of the exchange and to the spare junctors (6) via a single connection assembly (8.0) conveying optical signals in both call directions, in that each optical line is constituted by a single optical fiber conveying optical signals in both call directions, in that each junctor (5) and each spare junctor (6) is connected to the second optical switch assembly (C21 to C2n) via a duplexer (4 . 5; 4 . 6) and a single optical fiber (8.01, 8.03), and in that the connection assembly is connected via the line test optical fiber (8.04) and a duplexer (8.06) to a transmission test circuit (7.1) and to a reception test circuit (7.2), and via the junctor test optical fiber (8.05) and another duplexer (8.07) to said transmission test circuit and to said reception test circuit.

3. A connection system according to claim 1, characterized in that it includes first and second connection assemblies (8.1, 8.2) each specific to one call direction, in that each transmission circuit (5.2; 6.2) of the junctors (5) and of the spare junctors (6) is connected via a transmission fiber (8.12; 8.13) to the first connection assembly (8.1), in that each reception circuit (5.3; 6.3) of the junctors (5) and of the spare junctors (6) is connected via a reception fiber (8.22; 8.23) to the second connection assembly (8.2), in that each optical line is constituted by a single optical fiber (3) connected to both connection assemblies by means of a duplexer (4), in that each connection assembly is connected via an optical fiber (8.11; 8.21) to said duplexer (4), and in that the first connection assembly (8.1) is connected to a transmission test circuit (7.1), with the second connection assembly (8.2) being connected to a reception test circuit (7.2).

4. A connection system according to claim 1, characterized in that it includes first and second connection assemblies (8.1, 8.2) each specific to one call direction, in that each transmission circuit (5.2; 6.2) of the junctors (5) and of the spare junctors (6) is connected via a transmission optical fiber to the first connection assembly (8.1), in that each reception circuit (5.3; 6.3) of the junctors (5) and of the spare junctors (6) is connected via a reception optical fiber to the second connection assembly (8.2), in that each optical line is constituted by first and second optical fibers (3.1, 3.2), in that each reception circuit (1.3) of the subscriber terminals and of the remote junctors is connected via the first optical fiber (3.1) of an optical line to the first connection assembly (8.1), in that each transmission circuit (1.2) of the subscriber terminals and of the remote junctors is connected via the second optical fiber (3.2) of an optical line to the second connection assembly (8.2), and in that the first connection assembly (8.1) is connected to a transmission test circuit (7.1), while the second connection assembly (8.2) is connected to a reception test circuit (7.2).

5. A connection system according to claim 1, characterized in that a connection assembly comprises a plurality of connection modules (G11 to Gvk) and a fourth optical switch assembly (C41, C42), in that the third optical switch assembly of each of the connection modules is connected to the fourth optical switch assembly, and in that the said fourth optical switch assembly (C41, C42) is connected to at least one test circuit via said line test optical fiber and via said junctor test optical fiber.

6. A connection system according to claim 1 or 5, characterized in that each optical switch assembly is constituted by optical switches (C) each having two groups of accesses, the first group of accesses comprising p pairs of accesses each comprising a first access and a second access which are normally connected to each other via means internal to the optical switch, and the second group of accesses comprising a first access and a second access which are respectively connected to the first access and the second access of any one of the p pairs of accesses in the first group by means internal to the optical switch after breaking the internal connection between the access in the pair.

7. A connection system according to claim 1, characterized in that the second optical switch assembly is constituted by optical switches each having two groups of p accesses such that the accesses of the same rank in each of the two groups are associated and connected to each other via means internal to the optical switches, and at least one internal connection via which any one of the accesses of the first group may be connected to any one of the accesses of the second group after breaking the respective internal connections between each of said accesses and the accesses associated therewith.

8. A connection system according to claim 1, characterized in that optical switches of the first and second optical switch assemblies which are interconnected to each other are associated to form an optical matrix (OS).

9. A connection system according to claim 6 or 7, characterized in that the optical switches of the connection assemblies are connected via control lines (9.1; 9.2) to a control circuit (9) which is itself connected to the control means of the exchange, with the transmission test circuits (7.1) and the reception test circuits (7.2) being connected to said control circuit (9) via respective links (9.3 and 9.4).

## Patentansprüche

1. Vorrichtung zum Anschluß der optischen Teilnehmerleitungen sowie der Fernleitungen an eine Vermittlungszentrale in einem breitbandigen dienstintegrierten Nachrichtennetz, zum Beispiel dem Netz BISDN (Broadband Integrated Service Digital Network) und den geschalteten Teledistributionsnetzen, wobei jede an einen Teilnehmer angeschlossene optische Leitung einerseits mit einem Sendekreis und mit einem Empfangskreis eines Teilnehmerendgeräts beim Teilnehmer und andererseits mit einem Sendekreis und einem Empfangskreis eines Leitungsanschlusses in der Zentrale verbunden ist und wobei jede zu einem Fernamt führende Leitung einerseits an einen Sendekreis und einem Empfangskreis eines Anschlusses in diesem Fernamt und andererseits an einen Sendekreis und einen Empfangskreis eines Leitungsanschlusses in der Zentrale angeschlossen ist, wobei die Zentrale weiter Hilfsanschlüsse enthält, dadurch gekennzeichnet, daß die optischen Leitungen an die Leitungsanschlüsse (5) der Zentrale und an Hilfsanschlüsse (6) über mindestens eine Anschlußeinheit (8) angeschlossen sind, die mindestens einen Anschlußmodul mit einer Anschlußkapazität von N optischen Leitungen besitzt, daß ein Anschlußmodul eine erste (C11 bis C1n), eine zweite (C21 bis C2n) und eine dritte Gruppe (C31, C32) von optischen Schaltern enthält, und daß in einem Anschlußmodul die erste Gruppe optischer Schalter an die optischen Leitungen, die zweite Gruppe von optischen Schaltern einerseits an die erste Gruppe von optischen Schaltern und andererseits an die Leitungsanschlüsse (5) und die den N optischen Leitungen zugeordneten Hilfsanschlüsse (6) und die dritte Gruppe von optischen Schaltern einerseits an die erste Gruppe von optischen Schaltern und andererseits an mindestens einen Testkreis (7.1) über eine Lichtleitfaser (7.11) zum Leitungstest und über eine Lichtleitfaser (7.12) zum Test des Leitungsanschlusses angeschlossen ist.

2. Anschlußvorrichtung nach Anspruch 1, dadurch gekennzeichnet, daß die optischen Leitungen an die Leitungsanschlüsse (5) der Zentrale und an die Hilfsanschlüsse (6) über eine einzige Anschlußeinheit (8.0) angeschlossen sind, die die optischen Signale in beiden Kommunikationsrichtungen übertragen, daß jede optische Leitung aus einer einzigen Lichtleitfaser besteht, die die optischen Signale in beiden Kommunikationsrichtungen überträgt, daß jeder Leitungsanschluß (5) und jeder Hilfsanschluß (6) mit einer zweiten Gruppe optischer Schalter (C21 bis C2n) über einen Duplexer (4.5; 4.6) und eine einzige Lichtleitfaser (8.02; 8.03) verbunden ist, und daß die Anschlußeinheit über die Leitungstestfaser (8.04) und einen Duplexer (8.06) an einen Sendetestkreis (7.1) und einen Empfangstestkreis (7.2) und über die Lichtleitfaser zum Test des Anschlusses (8.05) und einen anderen Duplexer (8.07) an den Sendetestkreis und den Empfangstestkreis angeschlossen ist.

3. Anschlußvorrichtung nach Anspruch 1, dadurch gekennzeichnet, daß sie eine erste (8.1) und eine zweite Anschlußeinheit (8.2) aufweist, die je einer Übertragungsrichtung zugeordnet sind, daß jeder Sendekreis (5.2; 6.2) der Leitungsanschlüsse (5) und der Hilfsanschlüsse (6) über eine Sendelichtleitfaser (8.12; 8.13) an die erste Anschlußeinheit (8.1) angeschlossen ist, daß jeder Empfangskreis (5.3; 6.3) der Leitungsanschlüsse (5) und Hilfsanschlüsse (6) über eine Empfangsfaser (8.22; 8.23) mit der zweiten Anschlußeinheit (8.2) verbunden ist, daß jede optische Leitung aus einer einzigen Lichtleitfaser (3) besteht, die an die beiden Anschlußeinheiten über einen Duplexer (4) angeschlossen ist, daß jede Anschlußeinheit über eine Lichtleitfaser (8.11; 8.21) mit dem Duplexer (4) verbunden ist und daß die erste Anschlußeinheit (8.1) mit einem Sendetestkreis (7.1) und die zweite Anschlußeinheit (8.2) mit einem Empfangstestkreis (7.2) verbunden ist.

4. Anschlußvorrichtung nach Anspruch 1, dadurch gekennzeichnet, daß sie eine erste (8.1) und eine zweite Anschlußeinheit (8.2) enthält, die je einer Übertragungsrichtung zugeordnet sind, daß jeder Sendekreis (5.2; 6.2) der Leitungsanschlüsse (5) und der Hilfsanschlüsse (6) über eine Sendelichtleitfaser mit der ersten Anschlußeinheit (8.1) verbunden ist, daß jeder Empfangskreis (5.3; 6.3) der Leitungsanschlüsse (5) und der Hilfsanschlüsse (6) über eine Empfangslichtleitfaser mit der zweiten Anschlußeinheit (8.2) verbunden ist, daß die optischen Leitungen je von einer ersten (3.1) und einer zweiten Lichtleitfaser (3.2) gebildet werden, daß jeder Empfangskreis (1.3) der Teilnehmerendgeräte und der Fernleitungsanschlüsse über die erste Lichtleitfaser (3.1) einer optischen Leitung mit der ersten Anschlußeinheit (8.1) verbunden ist, daß jeder Sendekreis (1.2) der Teilnehmerendgeräte und der Fernleitungsanschlüsse über die zweite Lichtleitfaser (3.2) einer optischen Leitung mit der zweiten Anschlußeinheit (8.2) verbunden ist und daß die erste Anschlußeinheit (8.1) mit einem Sendetestkreis (7.1) und die zweite Anschlußeinheit (8.2) mit einem Empfangstestkreis (7.2) verbunden ist.

5. Anschlußvorrichtung nach Anspruch 1, dadurch gekennzeichnet, daß eine Anschlußeinheit mehrere Anschlußmoduln (G11 bis Gvk) sowie eine vierte Gruppe optischer Schalter (C41, C42) enthält, daß die dritte Gruppe von optischen Schaltern jedes der Anschlußmoduln mit der vierten Gruppe von optischen Schaltern verbunden ist und daß die vierte Gruppe von optischen Schaltern (C41, C42) an mindestens einen Testkreis über die Leitungsanschluß-Testfaser und über die Anschlußtestfaser angeschlossen ist.

6. Anschlußvorrichtung nach einem der Ansprüche 1 und 5, dadurch gekennzeichnet, daß jede Gruppe von optischen Schaltern aus optischen Schaltern (C) besteht, die je zwei Gruppen von Zugängen besitzen, von denen die erste Gruppe P Paare von Zugängen enthält, die von zwei normalerweise über interne Mittel des optischen Schalters verbundenen Zugängen gebildet werden, während die zweite Zugangsgruppe einen ersten und einen zweiten Zugang besitzt, die an den ersten bzw. zweiten Zugang irgendeines der P Zugangspaare der ersten Gruppe über interne Mittel des optischen Schalters nach dem Unterbrechen der internen Verbindung der Zugänge des Paares verbunden sind.

7. Anschlußvorrichtung nach Anspruch 1, dadurch gekennzeichnet, daß die zweite Gruppe von optischen Schaltern von optischen Schaltern gebildet wird, die je zwei Gruppen von P Zugängen, derart, daß die Zugänge gleichen Rangs jeder der beiden Gruppen zugeordnet und miteinander über interne Mittel der optischen Schalter verbunden sind, und eine interne Verbindung besitzen, über die ein beliebiger der Zugänge der ersten Gruppe an einen beliebigen der Zugänge der zweiten Gruppe angeschlossen werden kann, nachdem die entsprechenden internen Verbindungen der erwähnten beliebigen Zugänge zu dem zugeordneten Zugang unterbrochen worden sind.

8. Anschlußvorrichtung nach Anspruch 1, dadurch gekennzeichnet, daß je ein optischer Schalter der ersten und der zweiten Gruppe von optischen Schaltern, die miteinander verbunden sind, einander zugeordnet sind, um eine optische Matrix (OS) zu bilden.

9. Anschlußvorrichtung nach einem der Ansprüche 6 und 7, dadurch gekennzeichnet, daß die optischen Schalter der Anschlußeinheiten über Steuerleitungen (9.1; 9.2) an einen Steuerkreis (9) angeschlossen sind, der seinerseits mit Steuermitteln der Zentrale verbunden ist, wobei die Sendetestkreise (7.1) und Empfangstestkreise (7.2) über jeweilige Verbindungen (9.3; 9.4) mit dem Steuerkreis (9) verbunden sind.
